(19) Europäisches Patentamt
European Patent Office
Office européen des brevets

(11) EP 1 717 216 A1

(12) EUROPEAN PATENT APPLICATION
published in accordance with Art. 158(3) EPC

(43) Date of publication:
02.11.2006 Bulletin 2006/44

(51) Int Cl.:
C04B 35/569 (2006.01)   C04B 35/576 (2006.01)

(21) Application number: 04807736.6

(22) Date of filing: 24.12.2004

(86) International application number:
PCT/JP2004/019379

(87) International publication number:
WO 2005/063652 (14.07.2005 Gazette 2005/28)

(84) Designated Contracting States:
DE GB NL

(30) Priority: 26.12.2003 JP 2003435723
14.10.2004 JP 2004300162

(71) Applicant: Bridgestone Corporation
Tokyo 104-8340 (JP)

(72) Inventors:
• ODAKA, Fumi
c/o Bridgestone Co. Techn. Center
Kodaira-shi, Tokyo 187-8531 (JP)
• SHINOGAYA, T.
c/o Bridgestone Co. Techn. Center
Kodaira-shi, Tokyo 187-8531 (JP)
• MIYANO, Mari
c/o Bridgestone Co. Techn. Center
Kodaira-shi, Tokyo 187-8531 (JP)

(74) Representative: Whalley, Kevin
Marks & Clerk
90 Long Acre
GB-London WC2E 9RA (GB)

(54) **METHOD FOR PRODUCING SILICON CARBIDE SINTERED BODY FOR HEATER**

(57) A method of producing a silicon carbide sintered body for heaters, which contains 500 ppm or more of nitrogen, including obtaining slurry-like mixed powder obtained by dispersing silicon carbide powder in a solvent; obtaining a green body by pouring the mixed powder in a shaping die followed by drying; first heating step of heating the green body under a vacuum atmosphere up to a temperature in the range of 550 to 650°C; and secondheatingstepof, after further heating to a temperature equal to or higher than 1500°C under a nitrogen gas atmosphere, holding at the temperature under the nitrogen gas atmosphere to obtain a silicon carbide sintered body. And a silicon carbide sintered body for heaters, which has a nitrogen content of 500 ppm or more and the porosity of 32% by volume or less.

## FIG.1

**Description**

Technical Field

The present invention relates to a method of producing a silicon carbide sintered body for heater.

Background Art

A heater made of a silicon carbide sintered body does not have restriction in a usable atmosphere and is excellent in the quick temperature rise and fall characteristics. Accordingly, it is proposed to use as heaters in various kinds of heating processes of semiconductor wafers.

However, since the silicon carbide sintered body has high mechanical strength and is generally molded by extrusion, it is difficult to process it into complicated shapes. The foregoing processing problem has been overcome by producing a silicon carbide sintered body according to a cast molding method (Patent Document 1).

[Patent Document 1] Japanese Patent Application Laid-Open No. 11-67427

Disclosure of Invention

However, since the silicon carbide sintered body has the temperature dependency of the resistance, a range of applications as a heater component is restricted. Accordingly, a silicon carbide sintered body as a heater component, which is less in the temperature dependency, and a method of producing the same are in demand.

The invention relates to the followings:

A method of producing a silicon carbide sintered body for heaters, which contains 500 ppm or more of nitrogen, including obtaining slurry-like mixed powder obtained by dispersing silicon carbide powder in a solvent; obtaining a green body by pouring the mixed powder in a shaping die followed by drying; first heating step of heating the green body under a vacuum atmosphere up to a temperature in the range of 550 to 650°C; andsecondheatingstepof, after further heating to a temperature equal to or higher than 1500°C under a nitrogen gas atmosphere, holding at the temperature under the nitrogen gas atmosphere to obtain a silicon carbide sintered body.and

A silicon carbide sintered body for heaters, which has a nitrogen content of 500 ppm or more and the porosity of 32% by volume or less.

Brief Description of the Drawings

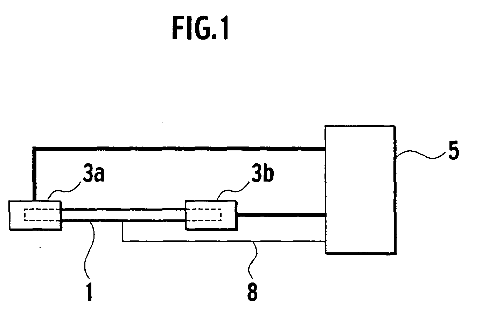

Fig. 1 is a conceptual diagram showing a measurement method of the resistance of a test piece.

Best Mode for Carrying Out the Invention

The inventors, after studying hard, found that when a silicon carbide sintered body is made porous the problem of the temperature dependence can be overcome. In what follows, the invention will be described with reference to embodiments. However, the invention is not restricted to the embodiments below.

[Components used in Method of Producing Silicon Carbide Sintered Body]

In the beginning, components that are used in a method of producing a silicon carbide sintered body according to the embodiments of the invention will be described:

(Silicon Carbide Powder)

As silicon carbide powder, an $\alpha$-type, $\beta$-type, amorphous one or a mixture thereof can be cited. Furthermore, in order to obtain a high purity silicon carbide sintered body, highpurity silicon carbide powder is preferably used as rawmaterial silicon carbide powder.

A grade of the $\beta$-type silicon carbide powder is not particularly restricted. For instance, commercially available $\beta$-type silicon carbide can be used. A particle diameter of the silicon carbide powder, from a viewpoint of high density, is preferable to be small. Specifically, it is preferably in the range of substantially 0.01 to 20 $\mu$m and more preferably in the range of 0.05 to 10 $\mu$m. When the particle diameter is less than 0.01 $\mu$m, handling in processes such as measurement, mixing and the like tends to be difficult. When it exceeds 20 μm, since the specific surface area is small, that is, a contact area with adjacent powder is small, the high density is difficult to obtain.

High purity silicon carbide powder can be obtained, for instance, by dissolving, in a solvent, a silicon source containing at least one kind of silicon compound, a carbon source containing at least one kind of organic compound that generates carbon upon heating and a polymerization or crosslinking agent, drying it, and firing the obtained powder under a non-oxidizing atmosphere, for instance, a nitrogen or argon atmosphere.

As the foregoing silicon source containing a silicon compound (hereinafter, referred to as a silicon source), liquid one and solid one can be used together, however at least one kind of liquid ones has to be selected. As liquid ones, a polymer of (mono-, di-, tri- or tetra-) alkoxy silane and tetra-alkoxy silane is used. Among the alkoxy silanes, tetra-alkoxy silane is preferably used. Specifically, methoxy silane, ethoxy silane, propoxy silane, buthoxy silane and the like can be cited, and from the viewpoint of handling, ethoxy silane is preferable. Furthermore, as a polymer of tetra-alkoxy silane, alowmolecular weight polymer (oligomer) having a polymerization degree of substantially 2 to 15 and liquid one of silicic acid polymers further higher in the polymerization degree can be cited. As solid ones that can be used together therewith, silicon oxide can be cited. The silicon oxide in the reaction sintering method includes, other than SiO, silica gel (colloidal super-fine silica-containing liquid that contains an OH group and an alkoxyl group inside thereof), silicon dioxide (silica gel, fine silica and quartz powder) and the like. The silicon sources may be used singularly or in combination of two or more kinds.

Among the silicon sources, from viewpoints of excellent uniformity and handling properties, an oligomer of tetraethoxy silane, a mixture of an oligomer of tetraethoxy silane and fine powdery silica and the like are preferable. Furthermore, as the silicone source, highpurity substances are used. An initial impurity content is preferably 20 ppm or less and more preferably 5 ppm or less.

A substance that is used as the carbon source is preferably a high purity organic compound that has oxygen inside of a molecule and leaves carbon upon heating. Specifically, aphenolicresin, a furan resin, an epoxy resin, a phenoxy resin and various kinds of sugars such as monosaccharides such as glucose and the like, oligosaccharides suchas cane sugar and the like, polysaccharides such as cellulose, starch and the like can be cited. From an obj ect of uniformly mixing these with the silicon source, liquid ones at room temperature, ones capable of dissolving in a solvent and ones that soften or liquefyupon heating such as thermoplastic ones or thermally fusible ones are mainly used. Among these, a resole phenolic resin and a novolac phenolic resin can be preferably used. In particular, the resole phenolic resin can be preferably used.

The polymerization and crosslinking catalysts that are used to produce high purity silicon carbide powder can be appropriately selected in accordance with a carbon source. When the carbon source is a phenolic resin or a furan resin, acids such as toluene sulfonic acid, toluene carbonic acid, acetic acid, oxalic acid, sulfuric acid and the like canbe cited. Among these, toluene sulfonic acid can be preferably used.

In a process of producing high purity silicon carbide powder that is raw material powder used in the reaction sintering method, a ratio of carbon to silicon (hereinafter abbreviated as C/Si ratio) can be defined by performing an element analysis of a carbide intermediate obtained by carbonizing the mixture at 1000°C. Stoichiometrically, free carbon in generated silicon carbide should be 0% when the C/Si ratio is 3.0. However, actually, owing to volatilization of a simultaneously generated SiO gas, free carbon is generated at a lower C/Si ratio. It is important to predetermine a composition so that an amount of free carbon in the generated silicon carbide powder may not be an inappropriate amount for producing a sintered body or the like. Normally, in the case of sintering at 1600°C or higher under around 1 atmosphere, the free carbon can be suppressed when the C/Si ratio is set in the range of 2.0 to 2.5; which range can be therefore preferably used. When the C/Si ratio is set to 2.55 or more, the free carbon remarkably increases and has an advantage in suppressing the grain growth; accordingly, the C/Si ratio may be appropriately selected in accordance with a target grain growth size. However, in the case that pressure of the atmosphere is set to lower or higher pressure, the C/Si ratio is not necessarily restricted to the above range since the C/Si ratio for obtaining pure silicon carbide varies.

(Solvent)

As the solvent that is used in the step of obtaining the slurry-like mixed powder, water, lower alcohols such as ethyl alcohol and the like, ethyl ether, acetone and the like can be cited. As the solvent, one having low impurity content is preferable. As a defoaming agent, a silicone defoaming agent and the like can be cited. Furthermore, an organic binder may be added when the slurry-like mixed powder is produced from silicon carbide powder. As the organic binder, a deflocculation agent, a powdery adhesive and the like can be cited. As the deflocculation agent, nitrogen-based compounds are preferable from a viewpoint of further improving an effect of imparting the electric conductivity. For instance, ammonia, polyacrylic acid ammonium and the like canbe preferablyused. As the powdery adhesive, a polyvinyl alcohol urethane resin (for instance, aqueous polyurethane) and the like can be used.

[Method of Producing Silicon Carbide Sintered Body for Heaters]

A method of producing a silicon carbide sintered body according to an embodiment of the invention includes (1) a step of obtaining slurry-like mixed powder that is obtained by dispersing silicon carbide powder in a solvent, (2) a step of obtaining a green body by pouring the obtained mixed powder in a shaping die followed by drying, (3) a first heating step of heating the obtained green body under a vacuum atmosphere to a temperature in the range of 550 to 650°C, and (4) a second heating step of, after further heating to a temperature equal to or higher than 1500°C under a nitrogen gas atmosphere, holding at the temperature under the nitrogen gas atmosphere to obtain a silicon carbide sintered body. In what follows, details will be given for each step.

(1) Step of Obtaining Mixed Powder

In the beginning, silicon carbide powder and a defoaming agent are dispersed in a solvent to produce slurry-like mixed powder. In the next place, with an agitating and mixing unit such as a mixer, a planetary ball mill or the like, the mixed powder is agitated and mixed for 6 to 48 hr, in particular, 12 to 24 hr. This is because when the mixed powder is not sufficiently agitated and mixed, pores are not uniformly dispersed in the green body.

(2) Step of Obtaining Green Body

The obtained slurry-like mixed powder is flowed in a casting die. Thereafter, after leaving and demolding, under a temperature condition in the range of 40 to 60°C, heating/drying or natural drying is applied to remove the solvent. Thus, a green body having a stipulated dimension, that is, a silicon carbide molded body that is obtained by removing the solvent from the slurry-like mixed powder and has many pores therein can be obtained.

(3) First Heating Step

The obtained green body is heated to a temperature in the range of 550 to 650°C under a vacuum atmosphere over substantially 2 hr. When the heating temperature is less than 550°C, the degreasing is insufficient. The degreasing process comes to an end around 650°C. Accordingly, the heating is applied at a constant temperature in the heating temperature range. The temperature rise speed, in order to inhibit the binder in the composition from exploding owing to rapid pyrolysis, is set at 300°C/hr or less. After the temperature reaches a constant temperature, the temperature is maintained under the vacuum atmosphere for 30 min to obtain a calcined body.

(4) Second Heating Step

In the next place, the obtained calcined body is heated to a temperature equal to or higher than 1500°C under a nitrogen gas atmosphere. The temperature is preferably elevated to 1500 to 2000°C or 1500 to 1950°C. The reason why the upper limit of the heating temperature is set at 2000°C is in that since an amount of nitrogen doped in the nitrogen atmosphere reaches an equilibrium at substantially 2000°C, the heating at a temperature higher than that is uneconomical. Furthermore, when the temperature is set at 2400°C or higher, a furnace is broken. Still furthermore, when the temperature is set outside of the range of 1500 to 2000°C, the mechanical strength is deteriorated. Accordingly, the heating is applied to a constant temperature in the temperature range. At that time, from a viewpoint of improving the mechanical strength, the heating temperature is preferably set in the range of 1700 to 2000°C. After the constant temperature is attained, the temperature condition is maintained under the nitrogen atmosphere for 0.5 to 8 hr. Under the same heating temperature, an amount of nitrogen in the silicon carbide sintered body can be increased by at least either one of (a) prolonging a holding time; or (b) raising pressure (atm). The pressure under the nitrogen gas atmosphere is preferably in the range of -0.5 to 0.2 kg/m$^2$. According to the above steps, a silicon carbide sintered body for heaters can be obtained.

[Silicon Carbide Sintered Body for Heaters]

In the silicon carbide sintered body for heaters according to the embodiment of the invention, which is obtained according to the foregoing method of producing, the porosity is 1 to 32% and preferably 5 to 29%. The porosity is preferably 28 to 32% from the industrial viewpoint. Furthermore, the resistance at 100°C is in the range of 0.02 to 0.06 Ωcm and preferably in the range of 0.03 to 0.05 Ωcm. When the resistance at 100°C is set A and the resistance at 1000°C is set B, B/A is in the range of 0.2 to 2. Since the silicon carbide sintered body has such physicality, the problem of the temperature dependency can be largely improved. Furthermore, a nitrogen content of the embodiment of the invention is 500 ppm or more, preferably in the range of 500 to 1200 ppm and more preferably in the range of 550 to 900 ppm. Accordingly, since the silicon carbide sintered body has the electrical conductivity, the electric discharge machining can be applied to process into a complicated shape. For instance, a heater can be produced by forming a cylindrical sample (sintered body), slicing it in a diametrical direction, followed by forming a spiral or concentric groove in the molded body.

Furthermore, the silicon carbide sintered body for heaters according to the embodiment of the invention has characteristics such as high purity, high density and high toughness. For instance, the silicon carbide sintered body has the density of 1.8 g/cm$^3$ or more and a structure where mainly cubic silicon particles having an average particle diameter of 2 to 8 $\mu$m are uniformly dispersed. Accordingly, the silicon carbide sintered body can be used as a structural member small in the fluctuation of the density and the like. It is reported that in general, when the density of the sintered body is less than 1.8 g/cm$^3$, the mechanical characteristics such as flexing strength, breaking strength and the like and the electrical property deteriorate and particles increase to deteriorate the stainability. As a conclusion, it can be said that the silicon carbide sintered body for heaters according to the embodiment of the invention has excellent mechanical and electrical characteristics.

A total content of impurities in the silicon carbide sintered body for heaters according to the embodiment of the invention is less than 10 ppm, preferably less than 5 ppm, more preferably less than 3 ppm and still more preferably less than 1 ppm. From a viewpoint of applications to the semiconductor industry field, the impurity content according to the chemical analysis only has a meaning as a reference value. Practically, the evaluation is different depending on whether the impurity is uniformly distributed or locally predominated. Accordingly, ones skilled in the art generally variously evaluate with a practical device under the predetermined heating conditions to what extent the impurity contaminates a wafer. According to a method of producing that includes uniformly mixing a liquid silicon compound, a non-metallic sintering aid and a polymerization or crosslinking agent, heating and carbonizing the obtained solid material under a non-oxidizing atmosphere, and sintering further under a non-oxidizing atmosphere, a total content of impurities excluding silicon, carbon and oxygen contained in the silicon carbide sintered body can be made less than 1 ppm. An amount of nitrogen of the silicon carbide sintered body for heaters obtained according to the embodiment of the invention is 150 ppm or more.

The silicon carbide sintered body for heaters thus obtained according to the embodiment of the invention preferably has the physicalityas shown below. That is, a total content of impurity elements other than silicon and carbon of the silicon carbide sintered body is less than 5 ppm. The density is 1.8 g/cm$^3$ and, in a preferable mode, in the range of 2.00 to 2.20 g/cm$^3$. The flexing strength is 70 MPa or more and, in a preferable mode, 100 MPa or more.

The respective purities of silicon carbide powder that is raw material powder of the invention, a silicon source for producing raw material powder, a non-metallic sintering aid and an inert gas used to obtain a non-oxidizing atmosphere are preferably 1 ppm or less in the respective impurity elements contents. However, when these are within allowable ranges of purification in the heating and sintering processes, the impurity element contents are not restricted to the above values. Furthermore, the impurity elements here are ones that belong to 1 through 16 groups in the Periodic Table according to IUPAC Nomenclature of Inorganic Chemistry, Rules 1989, whose atomic number is 3 or more and excluding 6 through 8 and 14 through 16.

In the above, the invention was described with the embodiment; however, the invention is not restricted to the above embodiment. Accordingly, as far as the heating conditions of the invention can be satisfied, a producing unit and the like are not particularly restricted, and known heating furnaces and reactors can be used.

EXAMPLES

In what follows, the invention will be specifically described with reference to examples and comparative examples. However, it goes without saying that the invention is not restricted to examples below.

[Examples 1 through 6] [Comparative Examples 1 and 2]

Preparation of Silicon Carbide Sintered Body

According to the method of producing a silicon carbide sintered body, which was described in the detailed description, a silicon carbide sinteredbodywas produced under the conditions below.

(1) Step of obtaining mixed powder: To 100 parts of high purity silicon carbide powder having a central particle diameter of 10 $\mu$m (silicon carbide that is produced according to a method of producing described in Japanese Patent Application Laid-Open No. 9-48605, having an impurity content of 5 ppm or less and containing 1.5% by weight of silica) as a silicon carbide powder, 40 parts of water, 0.3 parts of a deflocculation agent and 3 parts of a binder were added, followed by dispersing and mixing for 24 hr with a ball mill, and thereby a slurry-like mixed powder having the viscosity of 1 poise was obtained.

(2) Step of obtaining green body: The slurry-like mixed powder was cast in a plaster mold having a length of 130 mm, a width of 10 mm and a thickness of 2.5 mm, dried naturally for 24 hr at 22°C, thereby a green body was prepared.

(3) First heating step: The obtained green body was put in a graphite crucible having an inner diameter of 200 mm and a height of 80 mm and heated to 600°C under a vacuum atmosphere of pressure of -1 atm over 2 hr, followed by holding at 600°C for 30 min.

(4) Second heating step: After the first heating step, heat was applied under experimental conditions shown in Table 1.

[Examples 7 and 8]

Except that silicon carbide powder sintered under an argon atmosphere was used and the second heating step is carried out under the heating conditions shown in Table 1, experiments were carried out in the same manner as example 1.

For the obtained silicon carbide sintered bodies, the porosity, the nitrogen content, the resistance at 100°C (A) and the resistance at 1000°C (B) were investigated according to methods described below. Experimental conditions in the second heating step and obtained experimental results are shown in Table 1.

[Table 1]

| | | Example 1 | Example 2 | Example 3 | Example 4 | Example 5 | Example 6 | Example 7 | Example 8 | Comparative example 1 | Comparative example 2 |
|---|---|---|---|---|---|---|---|---|---|---|---|
| Cond itions | Atmosphere | Nitrogen | Nitrogen | Nitrogen | Nitrogen | Nitrogen | Nitrogen | Nitrogen | Nitrogen | Nitrogen | Argon |
| | Heating temperature (°C) | 1500 | 1900 | 1800 | 1800 | 1800 | 2000 | 1800 | 1900 | 1400 | 1800 |
| | Holding time (Hr) | 1 | 1 | 1 | 6 | 1 | 1 | 10 | 6 | 1 | 6 |
| | Pressure (atm) | -0.1 | -0.1 | -0.1 | -0.1 | 0.1 | -0.1 | -0.1 | -0.1 | -0.1 | -0.1 |
| Resul ts | Porosity (%) | 28 | 30 | 28 | 28 | 28 | 32 | 29 | 32 | 26 | 28 |
| | Amount of nitrogen (ppm) | 550 | 909 | 510 | 661 | 708 | 921 | 685 | 950 | 305 | 395 |
| | A; Resistance at 100°C ($\Omega$cm) | 0.031 | 0.028 | 0.029 | 0.025 | 0.027 | 0.021 | 0.028 | 0.035 | 0.08 | 0.62 |
| | B; Resistance at 1000°C ($\Omega$cm) | 0.028 | 0.026 | 0.027 | 0.021 | 0.022 | 0.037 | 0.023 | 0.029 | 0.001 | 0.0034 |
| | B/A | 0.90 | 0.93 | 0.93 | 0.84 | 0.81 | 1.76 | 0.83 | 0.82 | 0.01 | 0.01 |
| Note | | A green body was heated to a temperature of 600°C over 2 hr under a vacuum atmosphere at pressure of -1 (atm), followed by holding at 600°C for 30 min, further followed by heating under the above condition to obtain a silicon carbide sintered body. In examples 7 and 8, silicon carbide powder sintered under an argon atmosphere was used. | | | | | | | | | |

[Experimental Results]

From the experimental results above, the followings are found.

(1) Heating temperature

Example 1 and comparative example 1 were carried out under the same conditions except for the heating temperature. An amount of nitrogen was 550 ppm in example 1 and 305 ppm in comparative example 1. From this, it was found that in order to obtain a sufficient amount of nitrogen, the heating temperature of 1500°C or higher is necessary.
Example 2 and comparative example 2 were carried out under the same conditions except for the heating temperature. An amount of nitrogen in example 2 was 909 ppm and the resistance ratio (B/A) was 0.93. On the other hand, an amount of nitrogen in comparative example 2 was 921 ppm and the resistance ratio (B/A) was such high as 1.76. From this, it was found that in order to obtain such excellent amount of nitrogen and resistance ratio the heating temperature of 1900°C or lower is necessary.

(2) Heating atmosphere

Example 3 and comparative example 3 were carried out under the same conditions except for the heating atmosphere. An amount of nitrogen was 661 ppm in example 4 and 395 ppm in comparative example 3. From this, it was found that in order to obtain an excellent amount of nitrogen, the nitrogen atmosphere is necessary.

(3) Heating time and holding time

Example 3 and example 4 were carried out under the same conditions except for the holding time. Example 4 where the holding time was set to 6 hr had a more excellent amount of nitrogen. From this, it was found that the longer the holding time is, the more the amount of nitrogen becomes.

(4) Heating time and pressure

Example 3 and example 5 were carried out under the same conditions except for the pressure. Example 5 where the pressure was set to 0.1 atm had a more excellent amount of nitrogen.

(5) Silicon carbide powder

Even when silicon carbide powder sintered under an argon atmosphere was used, experimental results similar to the case where silicon carbide powder sintered under the nitrogen atmosphere was used were obtained.

[Evaluation criteria]

(1) Measurement of the porosity (%)

The porosity was measured according to the Archimedes method.

(2) Amount of nitrogen (ppm)

An oxygen/nitrogen analyzer (trade name: EF400, manufactured by Leco Corp.) was used to measure an amount of nitrogen.

(3) Resistances at 100 and 1000°C (Ω·cm)

As shown in Fig. 1, between electrodes 3a and 3b of a thyristor type current control heater power supply 5 provided with two copper electrodes 3a and 3b and a thermocouple 8, a test piece 1 having a length of 130 mm, a width of 10 mm and a thickness of 2.5 mm was nipped and held by 15 mm at both ends thereof. A voltage of one to several volts was continuously applied from a thyristor type current control heater power supply 5. A current at the time of reaching a constant temperature (100 or 1000°C) was recorded, and a resistance at each temperature was obtained according to an equation below:

$$\texttt{Resistance } (\Omega \cdot \texttt{cm}) = R/(\texttt{length} \times \texttt{width} \times \texttt{thickness})$$

R = voltage/current

The present application is based upon and claims the benefit of priority from the prior Japanese Patent Application No. 2003-435723 (filed on December 26, 2003) and Japanese Patent Application No. 2004-300162 (filed on October 14, 2004); the entire contents of which are incorporated herein by reference.

Industrial Applicability

According to the present invention, a silicon carbide sintered body for heaters, whose temperature dependency of the resistance is small, can be obtained.

**Claims**

**1.** A method of producing a silicon carbide sintered body for heater, which contains 500 ppm or more of nitrogen, comprising:

obtaining slurry-like mixed powder obtained by dispersing silicon carbide powder in a solvent;
obtaining a green body by pouring the mixed powder in a shaping die followed by drying;
first heating step of heating the green body under a vacuum atmosphere to a temperature in the range of 550 to 650°C; and
second heating step of, after further heating to a temperature equal to or higher than 1500°C under a nitrogen gas atmosphere, holding at the temperature under the nitrogen gas atmosphere to obtain a silicon carbide sintered body.

**2.** The method of producing a silicon carbide sintered body for heater of claim 1, wherein in the second heating step a temperature is raised to 1700 to 2000°C under a nitrogen gas atmosphere.

**3.** The method of producing a silicon carbide sintered body for heater of claim 2, wherein in the second heating step a holding time at the temperature under a nitrogen gas atmosphere is 0.5 to 8 hr.

**4.** The method of producing a silicon carbide sintered body for heater of claim 3, wherein in the second heating step pressure under a nitrogen gas atmosphere is -0.5 to 0.2 kg/m$^2$.

**5.** The method of a producing silicon carbide sintered body for heater of any one of claims 1 to 4, wherein the porosity of a silicon carbide sintered body for heater is 32% by volume or less.

**6.** The method of producing a silicon carbide sintered body for heater of any one of claims 1 to 5, wherein an amount of nitrogen of a silicon carbide sintered body for heater is 500 to 1200 ppm.

**7.** The method of producing a silicon carbide sintered body for heater of any one of claims 1 to 6, wherein the resistance of a silicon carbide sintered body for heater at 100°C is 0.02 to 0.06 $\Omega$ cm.

**8.** The method of producing a silicon carbide sintered body for heater of any one of claims 1 to 7, wherein, with the resistance of a silicon carbide sintered body for heater at 100°C as A and that at 1000°C as B, B/A is 0.2 to 2.

**9.** The method of producing a silicon carbide sintered body for heater of any one of claims 1 to 8, wherein a particle diameter of the silicon carbide powder in the step of obtaining the slurry-like mixed powder is 0.01 to 20 $\mu$m.

**10.** The method of producing a silicon carbide sintered body for heater of any one of claims 1 to 8, wherein a particle diameter of the silicon carbide powder in the step of obtaining the slurry-like mixed powder is 0.05 to 10 $\mu$m.

**11.** The method of producing a silicon carbide sintered body for heater of any one of claims 1 to 8, wherein the silicon carbide sintered body in the step of obtaining the slurry-like mixed powder is one fired under an argon atmosphere.

**12.** A silicon carbide sintered body for heater, wherein an amount of nitrogen is 500 ppm or more and the porosity is 32% by volume or less.

**13.** The silicon carbide sintered body for heater of claim 12, wherein the amount of nitrogen is 500 to 1200 ppm.

**14.** The silicon carbide sintered body for heater of claim 12, wherein the amount of nitrogen is 550 to 900 ppm.

**15.** The silicon carbide sintered body for heater of any one of claims 12 to 14, wherein the porosity is 5 to 29% by volume.

**16.** The silicon carbide sintered body for heater of any one of claims 12 to 15, wherein the resistance at 100°C is 0.02 to 0.06 $\Omega$ cm.

**17.** The silicon carbide sintered body for heater of any one of claims 12 to 15, wherein the resistance at 100°C is 0.03 to 0.05 $\Omega$ cm.

**18.** The silicon carbide sintered body for heater of any one of claims 12 to 15, wherein with the resistance of a silicon carbide sintered body for heater at 100°C as A and that at 1000°C as B, B/A is 0.2 to 2.

**19.** The silicon carbide sintered body for heater of claim 12, which is produced according to a method of producing of any one of claims 1 to 11.

# FIG.1

<div align="center">

**INTERNATIONAL SEARCH REPORT**

</div>

| | International application No. |
|---|---|
| | PCT/JP2004/019379 |

**A. CLASSIFICATION OF SUBJECT MATTER**
Int.Cl$^7$ C04B35/569-35/576

According to International Patent Classification (IPC) or to both national classification and IPC

**B. FIELDS SEARCHED**

Minimum documentation searched (classification system followed by classification symbols)
Int.Cl$^7$ C04B35/576, H05B3/14

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2005 |
| Kokai Jitsuyo Shinan Koho | 1971–2005 | Jitsuyo Shinan Toroku Koho | 1996–2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 11-79847 A (Bridgestone Corp.),<br>23 March, 1999 (23.03.99),<br>Par. Nos. [0047] to [0052], [0066], [0070];<br>example 4<br>& US 6090733 A | 12-14<br>1-11,15-19 |
| X<br>A | JP 8-12462 A (Denki Kagaku Kogyo Kabushiki<br>Kaisha),<br>16 January, 1996 (16.01.96),<br>Par. Nos. [0010] to [0023]<br>(Family: none) | 12<br>1-11,13-19 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 March, 2005 (28.03.05) | Date of mailing of the international search report<br>12 April, 2005 (12.04.05) |
|---|---|
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11067427 A
- JP 9048605 A
- JP 2003435723 A
- JP 2004300162 A